# EUROPEAN PATENT APPLICATION

(11) **EP 4 703 451 A1**
(43) Date of publication of application: **04.03.2026**
(21) Application number: 24796835.7
(22) Date of filing: 12.04.2024
(51) Int. Cl.: C09K 5/18

(54) **COOLANT AND METHOD FOR PRODUCING COOLANT**

(30) Priority: 24.04.2023 JP 2023070654
(71) Applicant: MITSUBISHI GAS CHEMICAL COMPANY, INC., Chiyoda-ku Tokyo 100-8324 (JP)
(72) Inventor: SHIGAKI Masahiko, Tokyo 125-8601 (JP)
(74) Representative: Müller-Boré & Partner Patentanwälte PartG mbB
(86) International application number: PCT/JP2024/014817
(87) International publication number: WO 2024/225079

(57) **Abstract**

Provided are a coolant and a method for producing the coolant. The coolant includes a solid A and a solid B, wherein the solid A and the solid B contain a compound that undergoes an endothermic reaction when the solid A and the solid B are brought into contact with each other, and at least one of the solid A and the solid B is an agglomerated mass, and when a state in which the agglomerated mass is thrown onto a horizontal surface and come to rest in a most stable state is observed from a direction perpendicular to the horizontal surface, and a smallest gap between two parallel lines tangent to an outline (projected image) of the agglomerated mass is defined as a minor axis diameter (b), an average value (b^{x}) of values obtained by excluding the top 10% and bottom 10% values from lengths of (b) is from 1 mm to 100 mm.

## Description

### Technical field

The present invention relates to a coolant and a method for producing the coolant.

### Background Art

In recent years, the need for cooling has increased in many fields, including sports, leisure, and distribution. As such a coolant, Patent Literature 1 discloses a portable ice bag in which a freezing agent consisting of ammonium nitrate and urea and a solvent selected from the group consisting of an aqueous solution of a water-soluble polymeric substance, a gel thereof and water are sealed in an inner synthetic polymer bag having a strength such that the inner bag can be easily ruptured by an external force when in use, and the ice bag is sealed in an outer synthetic polymer bag that is not ruptured by an external force that would easily rupture the inner bag, and when in use, an external force is applied to the outer bag to rupture the inner bag, bringing the freezing agent and the solvent into contact with each other. Patent Literature 2 describes a coolant composed of an ammonium nitrate molded body containing from 0.1% to 1.5% by weight of water obtained by solidifying and molding molten ammonium nitrate.

### Citation List

### Patent Literature

Patent Literature 1: Japanese Patent Laid-Open No. 59-155486
Patent Literature 2: Japanese Patent Laid-Open No. 8-295508

### Summary of Invention

### Technical Problem

However, a colder coolant is not necessarily better, and particularly if the coolant becomes too cold immediately after the cooling reaction, it can cause problems such as pain and discomfort due to being too cold. An object of the present invention is to solve this problem by providing a coolant that does not become too cold immediately after cooling, and a method for producing the coolant.

### Solution to Problem

As a result of research conducted in view the above-described problem, the inventors found that the problem can be solved by bringing two types of solids into contact with each other to cause an endothermic reaction, wherein at least one of the solids is an agglomerated mass having a predetermined size.

Specifically, the above-described problem can be solved by the following means.
<1> A coolant including a solid A and a solid B, wherein
   the solid A and the solid B contain a compound that undergoes an endothermic reaction when the solid A and the solid B are brought into contact with each other, and
   at least one of the solid A and the solid B is an agglomerated mass, and when a state in which the agglomerated mass is thrown onto a horizontal surface and come to rest in a most stable state is observed from a direction perpendicular to the horizontal surface, and a smallest gap between two parallel lines tangent to an outline (projected image) of the agglomerated mass is defined as a minor axis diameter (b), an average value (b^{x}) of values obtained by excluding the top 10% and bottom 10% values from lengths of (b) is from 1 mm to 100 mm.
<2> The coolant according to <1>, wherein the solid A contains a hydrate, and the solid B contains a hydrate dissociation agent.
<3> The coolant according to <1> or <2>, wherein
   the solid A contains a hydrate of an inorganic substance, and
   the solid B contains at least one selected from a polybasic acid, a metal salt of a polybasic acid, and an inorganic ammonium salt.
<4> The coolant according to <1> or <2>, wherein
   the solid A contains a hydrate of an inorganic substance, and
   the solid B contains at least one selected from the group consisting of adipic acid, oxalic acid, succinic acid, malic acid, acetic acid, tartaric acid, fumaric acid, and citric acid, and metal salts thereof.
<5> The coolant according to any one of <1> to <4>, wherein the solid B is an agglomerated mass.
<6> The coolant according to <5>, wherein the solid B contains a moisture absorbent.
<7> The coolant according to any one of <1> to <6>, wherein the coolant further includes a moisture absorbent.
<8> The coolant according to <6> or <7>, wherein the moisture absorbent is at least one selected from the group consisting of starch, lactose, and cellulose.
<9> The coolant according to any one of <1> to <8>, wherein the solid A and the solid B are in a non-contact state until use.
<10> The coolant according to any one of <1> to <9>, wherein when a gap measured in the direction perpendicular to the minor axis diameter (b) of the agglomerated mass is defined as a major axis diameter (l), a ratio (l^{x})/(b^{x}) of an average value (l^{x}) of values obtained by excluding the top 10% and bottom 10% values from lengths of (l) and the average value (b^{x}) is from 1 to 50.
<11> A method for producing a coolant that includes a solid A and a solid B, wherein
   the solid A and the solid B contain a compound that undergoes an endothermic reaction when the solid A and the solid B are brought into contact with each other, and
   the method includes molding at least one of the solid A and the solid B into an agglomeration.
<12> The method for producing a coolant according to <11>, wherein the coolant is the coolant according to any one of <1> to <10>.

### Advantageous Effects of Invention

The present invention can provide a coolant that does not become too cold immediately after cooling, and a method for producing the coolant.

### Brief Description of the Drawing

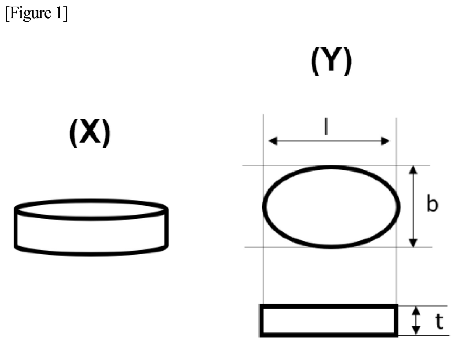

[Figure 1] Figure 1 is a schematic diagram for illustrating a minor axis diameter (b) and a major axis diameter (l) of an agglomerated mass of the present invention, as well as a length of the highest portion (t) of the height from a horizontal surface.

### Description of Embodiments

A mode for carrying out the present invention (hereinafter, simply referred to as "this embodiment") will now be described in detail. It is noted that the following embodiment is an illustrative example for describing the present invention, and the present invention is not limited to only this embodiment.

In addition, in this specification, the meaning of "from ... to" includes the numerical values described before and after "..." as a lower limit value and an upper limit value.

In this specification, the various physical property values and characteristic values are assumed to be values as of 23°C, unless otherwise stated.

If the measurement methods and the like described in the standards shown in this specification differ from year to year, unless otherwise stated, those measurement standards shall be based on the standards as of January 1, 2023.

The scale and the like of Figure 1 may be different from the actual case.

The coolant of this embodiment is characterized in that the coolant includes a solid A and a solid B, the solid A and the solid B include a compound that undergoes an endothermic reaction when the solid A and the solid B are brought into contact with each other, at least one of the solid A and the solid B is an agglomerated mass, and when a state in which the agglomerated mass is thrown onto a horizontal surface and come to rest in a most stable state is observed from a direction perpendicular to the horizontal surface, and a smallest gap between two parallel lines tangent to an outline (projected image) of the agglomerated mass is defined as a minor axis diameter (b), an average value (b^{x}) of values obtained by excluding the top 10% and bottom 10% values from lengths of (b) is from 1 mm to 100 mm.

By adopting such a configuration, the endothermic reaction proceeds gradually, making it possible to provide a coolant that does not become too cold immediately after cooling.

In this embodiment, the coolant includes a solid A and a solid B, and at least one of those is an agglomerated mass. As used herein, agglomerated mass is used in a sense that includes granular materials, tablets, and the like, as well as granular materials in which two or more particles have agglomerated due to heat, pressure, water, adhesiveness, and the like. In this embodiment, it is sufficient that one of the solid A or the solid B is an agglomerated mass, but both may be agglomerated masses.

In this embodiment, when a state in which the agglomerated mass is thrown onto a horizontal surface and come to rest in a most stable state is observed from a direction perpendicular to the horizontal surface, and a smallest gap between two parallel lines tangent to an outline (projected image) of the agglomerated mass is defined as a minor axis diameter (b), an average value (b^{x}) of values obtained by excluding the top 10% and bottom 10% values from lengths of (b) is from 1 mm to 100 mm.

Figure 1 is a schematic diagram of an example of a single agglomerated mass of this embodiment, in which Figure 1(X) illustrates an external view of the single agglomerated mass in a stable at-rest state, and Figure 1(Y) illustrates the agglomerated mass of Figure 1(X) viewed from another direction. When an agglomerated mass like that shown in Figure 1(X) is thrown onto a horizontal surface, the agglomerated mass is in its most stable at-rest state when one of disk face is resting on the horizontal surface, as illustrated in Figure 1(X). In this state, the direction perpendicular to the horizontal surface is the upper diagram in Figure 1(Y). When observed from the direction perpendicular to the horizontal surface, the smallest gap b between two parallel lines that are tangent to the outline (projected image) of the agglomerated mass is the minor axis diameter.

In this embodiment, the average value (b^{x}) of values obtained by excluding the top 10% and bottom 10% values from the lengths of this minor axis diameter (b) is from 1 mm to 100 mm. When the average value (b^{x}) is equal to or more than the lower limit value, a rapid cooling reaction tends to be more effectively suppressed. Further, when the average value (b^{x}) is equal to or less than the upper limit value, production properties are excellent, the cooling reaction is not suppressed too much, the solid A and the solid B can easily come into contact with each other, and a sensation in which the coolant feels like a foreign object when brought into contact with the object to be cooled, such as the body, during use tends to be effectively suppressed. When the number of agglomerated masses is 3 or less, the average value of all minor axis diameters (b) of agglomerated masses is taken as the average value (b^{x}), not excluding the top 10% and bottom 10% of the length (b). The same applies to the average value (l^{x}) described below.

The average value (b^{x}) is preferably 2 mm or more, and is preferably 90 mm or less, more preferably 70 mm or less, further preferably 50 mm or less, much more preferably 40 mm or less, still much more preferably 30 mm or less, and depending on the application and the like, may further be 24 mm or less, 19 mm or less, or 9 mm or less.

Further, in this embodiment, when a gap measured in the direction perpendicular to the minor axis diameter (b) of the agglomerated mass is defined as a major axis diameter (l), a ratio (l^{x})/(b^{x}) of an average value (l^{x}) of values obtained by excluding the top 10% and bottom 10% values from the lengths of the major axis diameter (l) and the average value (b^{x}) is preferably from 1 to 50. When the average value (l^{x}) is equal to or more than the lower limit value, production properties tend to be further improved. Further, when the average value (l^{x}) is equal to or less than the upper limit value, shape retention against impact and ease of transport tend to be further improved.

Here, the major axis diameter (l) corresponds to (l) in Figure 1(Y), and means the gap measured in the direction perpendicular to the minor axis diameter (b). The method of measuring the major axis diameter (l) and calculating the average value (l^{x}) is the same as the method of measuring the minor axis diameter (b) and calculating the average value (b^{x}).

The (l^{x})/(b^{x}) ratio is preferably 1 or more, and is preferably 40 or less, more preferably 30 or less, further preferably 20 or less, much more preferably 10 or less, and still much more preferably 5 or less.

Further, in this embodiment, when a state in which the agglomerated mass is thrown onto a horizontal surface and come to rest in a most stable state is observed from a direction perpendicular to the horizontal surface, and a highest portion (t) of the height from the horizontal surface of the outline (projected image) of the agglomerated mass is defined, an average value (t^{x}) of values obtained by excluding the top 10% and bottom 10% values from the lengths of (t) is preferably 1 mm or more, more preferably 2 mm or more, further preferably 3 mm or more, much more preferably 4 mm or more, and may be 5 mm or more. When the average value (t^{x}) is equal to or more than the above lower limit value, the effect of suppressing a rapid cooling reaction tends to be further improved. The average value (t^{x}) is preferably 100 mm or less, more preferably 80 mm or less, further preferably 50 mm or less, much more preferably 25 mm or less, and still much more preferably 10 mm or less. When the average value (t^{x}) is equal to or less than the above upper limit value, production properties are excellent, the cooling reaction is not suppressed too much, the solid A and the solid B can easily come into contact with each other, and a sensation in which the coolant feels like a foreign object when brought into contact with the object to be cooled, such as the body, during use tends to be effectively suppressed.

In addition, in this embodiment, an average value (V^{x}) of values obtained by excluding the top 10% and bottom 10% values from the volumes (V) of the agglomerated mass is preferably 1 mm³ or more, more preferably 8 mm³ or more, further preferably 27 mm³ or more, much more preferably 64 mm³ or more, and still much more preferably 125 mm³ or more. When the average value (V^{x}) is equal to or more than the above lower limit value, the effect of suppressing a rapid cooling reaction tends to be further improved. Further, the average value (V^{x}) of values obtained by excluding the top 10% and bottom 10% values from the volumes of the agglomerated mass is preferably 1,000,000 mm³ or less, more preferably 512,000 mm³ or less, further preferably 216,000 mm³ or less, much more preferably 64,000 mm³ or less, and still much more preferably 8,000 mm³ or less. When the volume (V^{x}) is equal to or less than the above upper limit value, production properties are excellent, the cooling reaction is not suppressed too much, the solid A and the solid B can easily come into contact with each other, and a sensation in which the coolant feels like a foreign object when brought into contact with the object to be cooled, such as the body, during use tends to be effectively suppressed.

In this embodiment, as described above, one of the solid A and the solid B may be an agglomerated mass, but preferably one is an agglomerated mass and the other is a powder.

In this embodiment, the solid A and the solid B contain a compound that undergoes an endothermic reaction when brought into contact with each other. That is, when the component a contained in the solid A and the component b contained in the solid B come into contact, an endothermic reaction proceeds. By causing the endothermic reaction to proceed in this way, a cooling effect can be achieved. In particular, in this embodiment, by precisely adjusting the size of the agglomerated mass, excessive cooling immediately after the start of the endothermic reaction can be effectively suppressed.

In this embodiment, the mass ratio of the component a contained in the solid A to the component b contained in the solid B is not particularly determined as long as the endothermic reaction proceeds, but is preferably 1:9 to 9:1, more preferably 2:8 to 8:2, and may further be 3:7 to 8:2, 4:6 to 8:2, 5:5 to 8:2, or 6:4 to 8:2.

The coolant in this embodiment may contain only one type of the component a contained in the solid A, or may contain two or more types. When two or more types are contained, it is preferable that the total amount of the component a is in the above range.

The coolant in this embodiment may contain only one type of the component b contained in the solid B, or may contain two or more types. When two or more types are contained, it is preferable that the total amount of the component b is in the above range.

In the coolant of this embodiment, it is preferable that the solid A contains a hydrate and the solid B contains a hydrate dissociation agent. That is, in this embodiment, it is preferable that the component a contained in the solid A is a hydrate, and the component b contained in the solid B is a hydrate dissociation agent. By making the endothermic reaction a hydrate dissociation reaction, a coolant with high safety can be obtained.

As described above, the component a contained in the solid A is preferably a hydrate, and more preferably a hydrate of an inorganic substance.

Further, the hydrate of an inorganic substance is preferably a hydrate having 5 water molecules or more, and more preferably a hydrate having 8 water molecules or more, and is preferably a hydrate a hydrate having 20 water molecules or less, more preferably a hydrate having 18 water molecules or less, and further preferably a hydrate having 15 water molecules or less.

The component a is further preferably a hydrate of a metal salt of citric acid, sulfuric acid, or phosphoric acid, and further preferably a hydrate of a metal phosphate. Examples of the component a include magnesium citrate nonahydrate, sodium sulfate decahydrate, sodium hexacyanoferrate(II) decahydrate, ammonium aluminum sulfate dodecahydrate, disodium hydrogen phosphate dodecahydrate, trisodium phosphate dodecahydrate, ammonium iron(III) sulfate dodecahydrate, potassium aluminum sulfate dodecahydrate, and aluminum sulfate 14-18 hydrate.

The solid A preferably contains a moisture absorbent. By containing a moisture absorbent, moisture generated in the endothermic reaction can be effectively absorbed, and a long cooling time can be achieved.

The type of the moisture absorbent is not particularly specified, and a wide range of compounds that absorb moisture generated in an endothermic reaction can be used. Preferably, the moisture absorbent is at least one selected from the group consisting of starch, lactose, and cellulose, more preferably cellulose, and further preferably crystalline cellulose.

The amount of the component a contained in the solid A is, when the solid A is taken as 100% by mass, preferably 80% by mass or more, more preferably 90% by mass or more, further preferably 95% by mass or more, and much more preferably 99% by mass or more. The upper limit of the amount of the component a contained in the solid A may be 100% by mass when the solid A is taken as 100% by mass.

Further, when the solid A contains a moisture absorbent, the total of the component a and the moisture absorbent is, when the solid A is taken as 100% by mass, preferably 75% by mass or more, more preferably 85% by mass or more, further preferably 90% by mass or more, much more preferably 93% by mass or more, and depending on the application and the like, may be 95% by mass or more, 97% by mass or more, or 99% by mass or more. The upper limit of the total amount of the component a and the moisture absorbent contained in the solid A may be 100% by mass when the solid A is taken as 100% by mass.

On the other hand, the amount of the moisture absorbent contained in the solid A is, when the solid A is taken as 100% by mass, preferably 0.1% by mass or more, more preferably 0.5% by mass or more, and further preferably 1.5% by mass or more, and is preferably 10% by mass or less, and more preferably 7% by mass or less.

The solid A may contain only one type of the moisture absorbent, or may contain two or more types. When the solid A contains two or more types of the moisture absorbent, the total amount is preferably in the above range.

As described above, the component b contained in the solid B in the coolant of this embodiment is preferably a hydrate dissociation agent. The hydrate dissociation agent is not particularly limited as long as it is a substance that causes an endothermic reaction when brought into contact with the hydrate (component a), but more preferably it is at least one selected from a polybasic acid, a metal salt of a polybasic acid, and an inorganic ammonia salt, more preferably a polybasic acid and/or inorganic ammonia salt, and further preferably a polybasic acid.

The polybasic acid and metal salt of a polybasic acid preferably include at least one selected from the group consisting of adipic acid, oxalic acid, succinic acid, malic acid, acetic acid, tartaric acid, fumaric acid, and citric acid, and metal salts thereof.

Examples of the salt constituting the metal salt include a sodium salt, a potassium salt, a calcium salt, and a magnesium salt, a sodium salt and a potassium salt are preferable, and a sodium salt is preferable.

Examples of the inorganic ammonium salt include ammonium dihydrogen phosphate, potassium dihydrogen phosphate, sodium dihydrogen phosphate, ammonium nitrate, ammonium chloride, ammonium sulfate, ammonium carbonate, ammonium hydrogen carbonate, ammonium aluminum sulfate dodecahydrate, ammonium bromide, ammonium borate, ammonium borate octahydrate, and ammonium hydrogen phosphate. Ammonium sulfate, ammonium carbonate, ammonium hydrogen carbonate, ammonium aluminum sulfate dodecahydrate, ammonium bromide, ammonium borate octahydrate, and ammonium hydrogen phosphate are preferable, and ammonium hydrogen carbonate and ammonium borate octahydrate are more preferable.

The solid B preferably contains a moisture absorbent. By containing a moisture absorbent, moisture generated in the endothermic reaction can be effectively absorbed, and a long cooling time can be achieved.

The type of the moisture absorbent is not particularly specified, and a wide range of compounds that absorb moisture generated in an endothermic reaction can be used. Preferably, the moisture absorbent is at least one selected from the group consisting of starch, lactose, and cellulose, more preferably cellulose, and further preferably crystalline cellulose.

The amount of the component b contained in the solid B is, when the solid B is taken as 100% by mass, preferably 75% by mass or more, more preferably 85% by mass or more, further preferably 90% by mass or more, much more preferably 93% by mass or more, and depending on the application and the like, may be 95% by mass or more, 97% by mass or more, or 99% by mass or more. The upper limit of the total amount of the component b contained in the solid B may be 100% by mass when the solid B is taken as 100% by mass.

Further, when the solid B contains a moisture absorbent, the total of the component b and the moisture absorbent is, when the solid B is taken as 100% by mass, preferably 75% by mass or more, more preferably 85% by mass or more, further preferably 90% by mass or more, much more preferably 93% by mass or more, and depending on the application and the like, may be 95% by mass or more, 97% by mass or more, or 99% by mass or more. The upper limit of the total amount of the component b and the moisture absorbent contained in the solid B may be 100% by mass when the solid B is taken as 100% by mass.

On the other hand, the amount of the moisture absorbent contained in the solid B is, when the solid B is taken as 100% by mass, preferably 0.1% by mass or more, more preferably 0.5% by mass or more, and further preferably 1.5% by mass or more, and is preferably 10% by mass or less, and more preferably 7% by mass or less.

The solid B may contain only one type of the moisture absorbent, or may contain two or more types. When the solid B contains two or more types of the moisture absorbent, the total amount is preferably in the above range.

The coolant of this embodiment may contain components other than the solid A and the solid B. Examples of components other than the solid A and the solid B include a moisture absorbent, an excipient, a lubricant, and a surface coating agent. By containing a moisture absorbent, moisture generated in the endothermic reaction can be effectively absorbed, and an acceleration of the endothermic reaction can be more effectively suppressed. More specifically, by absorbing moisture with the moisture absorbent, it is possible to effectively suppress the polybasic acid from dissolving in water and the reaction accelerating. The details of the moisture absorbent are the same as the moisture absorbent that may be included in the above-described solid B, and the preferred range is also the same.

When the coolant of this embodiment contains a moisture absorbent, the content of the moisture absorbent in 100% by mass of the coolant is preferably 0.01% by mass or more, more preferably 0.05% by mass or more, further preferably 0.1% by mass or more, much more preferably 0.5% by mass or more, and depending on the application and the like, may be 1% by mass or more, and is preferably 5% by mass or less, more preferably 3% by mass or less, and may be 2% by mass or less.

The "other components", such as moisture absorbent, contained in the coolant refer to components other than the solid A and/or solid B.

The coolant of this embodiment may contain only one type of other component (preferably a moisture absorbent), or may contain two or more types of other components. When two or more types are contained, the total amount is preferably in the above range.

In a first embodiment of the coolant of this embodiment, the solid A is a powder, the solid B is an agglomerated mass, the component a is a hydrate of an inorganic substance, and the component b is at least one selected from a polybasic acid, a metal salt of a polybasic acid, and an inorganic ammonium salt. Further, the solid B may contain a moisture absorbent.

In a second embodiment of the coolant of this embodiment, the solid A is an agglomerated mass, the solid B is a powder, the component a is a hydrate of an inorganic substance, and the component b is at least one selected from a polybasic acid, a metal salt of a polybasic acid, and an inorganic ammonium salt. Further, the coolant may contain a moisture absorbent as another component.

In this embodiment, it is preferable that the solid A and the solid B are in a non-contacting state until use. By preventing the solid A and the solid B from coming into contact with each other until use, it is possible to prevent the endothermic reaction between the solid A and the solid B from progressing until use.

Examples of methods for preventing contact between the solid A and the solid B include storing them in different packaging containers and mixing them at the time of use, and coating the surface of at least one of the solid A and/or solid B with a surface coating agent.

The method for producing the coolant of this embodiment is not particularly specified, but includes a method for producing a coolant that contains a solid A and a solid B, wherein the solid A and the solid B contain a compound that undergoes an endothermic reaction when the solid A and the solid B are brought into contact with each other, and the method includes molding at least one of the solid A and the solid B into an agglomeration. By molding at least one of the solid A and the solid B into an agglomeration, the endothermic reaction can be suppressed from progress excessively, and initial overcooling can be effectively suppressed.

Further, a lubricant may be added to the starting materials when forming at least one of the solid A and the solid B into an agglomeration. Adding a lubricant improves slipperiness, which tends to further facilitate the production of an agglomerated mass.

In the coolant of this embodiment, for a total amount of the coolant of 10 g, when the solid A and the solid B are brought into contact at 23°C, it is preferable that, after the cooling temperature falls below 18°C, the time until the cooling temperature returns to 18°C is within 60 minutes, more preferably within 50 minutes, further preferably within 40 minutes, much more preferably within 30 minutes, still much more preferably within 30 minutes, and further much more preferably within 20 minutes. The lower limit value of the time until the temperature recovers is more than 0 minutes, and may be 1 minute or more. Depending on the application etc., the minimum cooling temperature of the coolant of this embodiment may be set so as to not be less than 18°C. The coolant of this embodiment is very useful because it can prevent the solid A and the solid B from being cooled too much immediately after they come into contact with each other.

The coolant of this embodiment preferably cools in a moderate manner. Specifically, the minimum temperature during cooling is preferably 5°C or higher, more preferably 8°C or higher, and further preferably 10°C or higher. The minimum cooling temperature during cooling in this embodiment is preferably 25°C or lower, and more preferably 20°C or lower.

The coolant of this embodiment is widely used for applications requiring cooling, but can be preferably used as a body coolant, food coolant, equipment coolant, animal coolant, fresh flower coolant, and the like.

### Examples

The present invention will now be described below in more detail with reference to examples. The materials, amounts used, proportions, processing details, processing procedures, and the like indicated in the following examples may, within the spirit of the present invention, be changed as appropriate. Therefore, the scope of the present invention is not limited to the specific examples shown below.

In cases where the measurement equipment used in the examples is difficult to obtain due to discontinuation or the like, other equipment with equivalent performance can be used for the measurements.

| | |
|---|---|
| Disodium hydrogen | phosphate dodecahydrate: Manufacturer: Fujifilm Wako Pure Chemical Corporation |
| Trisodium phosphate dodecahydrate: Manufacturer: | Fujifilm Wako Pure Chemical Corporation |
| Citric acid: Manufacturer: | Fujifilm Wako Pure Chemical Corporation |
| DL-Malic acid: Manufacturer: | Fujifilm Wako Pure Chemical Corporation |
| KC Flock-W50: | Crystalline cellulose, manufacturer: Nippon Paper Industries Co., Ltd. |
| KC Flock-W200: | Crystalline cellulose, manufacturer: Nippon Paper Industries Co., Ltd. |

### Example 1

The component b shown in Table 1 was molded with a molding machine at a pressure of 415 kgf/cm². One of the obtained agglomerated masses was thrown onto a horizontal surface and allowed to come to rest stably. Then, as shown in Figure 1, the minor axis diameter (b), the major axis diameter (l) measured in a direction perpendicular to the minor axis diameter (b), and the highest portion (t) of the height from the horizontal surface of the outline of the agglomerated mass (projected image) were measured as described above from a projection of the outline of each agglomerated mass. l^{X} was 25 mm, b^{x} was 25 mm, and t^{x} was 5 mm. The volume of the agglomerated mass was 2454 mm³. The projection was performed visually.

The component a (powder) shown in Table 1 was added to the obtained agglomerated mass in the proportions (parts by mass) shown in Table 1, and the minimum cooling temperature (°C) was measured. In addition, the time (minutes) required for the temperature to return to 18°C after the component a was added and the temperature had dropped to below 18°C was measured.

The cooling temperature was measured as follows.

An aluminum cup of an upper diameter × lower diameter × height H (mm) of ϕ65 × ϕ54 × 23 having a thermocouple attached to a lower surface was placed on an insulating material having a thickness of 3 cm or more, and measurements were taken using a data logger.

### Examples 2 to 4

The component b and the moisture absorbent shown in Table 1 were mixed in the proportions (parts by mass) shown in Table 1, homogenized, and then subjected to the same process as in Example 1 to obtain an agglomerated mass. The agglomerated mass had an l^{x} of 25 mm, b^{x} of 25 mm, and t^{x} of 5 mm. The volume of the agglomerated mass was 2454 mm³.

The component a (powder) shown in Table 1 was added to the obtained agglomerated mass in the proportion shown in Table 1, and the minimum temperature (°C) and the time (min) required to return to 18°C were measured in the same manner as in Example 1. The difference Δ (°C) in the minimum temperature compared to Example 1 was also calculated.

### Comparative Examples 1 to 4

The component a (powder) and component b (powder) shown in Table 1 were mixed with a moisture absorbent (powder) as required in the proportions (parts by mass) shown in Table 1. The minimum cooling temperature (°C) after homogenization and the time (min) required to return to 18°C were measured in the same manner as in Example 1. For Comparative Examples 2 to 4, the difference Δ (°C) in minimum temperature compared to Comparative Example 1 was also calculated.

**[Table 1]**

| | | | Example 1 | Example 2 | Example 3 | Example 4 | Comparative Example 1 | Comparative Example 2 | Comparative Example 3 | Comparative Example 4 |
|---|---|---|---|---|---|---|---|---|---|---|
| Solid A | Component a | Disodium hydrogen phosphate dodecahydrate | 7 | 7 | 7 | 7 | 7 | 7 | 7 | 7 |
| Solid B | Component b | Citric acid | 3 | 3 | 3 | 3 | 3 | 3 | 3 | 3 |
| | Moisture absorbent | KC flock-W50 | 0 | 0.03 | 0.06 | 0.15 | 0 | 0.03 | 0.06 | 0.15 |
| Formation of agglomerated mass of solid B | | | formed | formed | formed | formed | not formed | not formed | not formed | not formed |
| Evaluations | Minimum temperature (°C) | | 7.9 | 12.6 | 13.4 | 17.2 | 0.1 | 3.0 | 5.3 | 8.6 |
| | Difference Δ (°C) in minimum temperature | | - | 4.7 | 5.5 | 9.3 | - | 2.9 | 5.2 | 8.5 |
| | Cooling time (min) taken to return to 18°C | | 31.3 | 44.1 | 43.9 | 5.7 | 26.3 | 29.5 | 38.3 | 27.3 |

### Examples 5 to 7

The component b and the moisture absorbent shown in Table 2 were mixed in the proportions (parts by mass) shown in Table 2, and then subjected to the same process as in Example 1 to obtain an agglomerated mass. The obtained agglomerated mass had an l^{x} of 25 mm, b^{x} of 25 mm, and t^{x} of 5 mm. The average volume of the agglomerated mass was 2454 mm³.

The minimum temperature (°C) and the time (min) required to return to 18°C were measured in the same manner as in Example 1. The difference Δ (°C) in the minimum temperature compared to Example 1 was also calculated.

### Comparative Examples 5 to 7

The component a (powder) and component b (powder) shown in Table 2 were mixed with a moisture absorbent (powder) as required in the proportions (parts by mass) shown in Table 2.

The minimum temperature (°C) and time (min) required to return to 18°C were measured in the same manner as in Example 1. Further, the difference Δ (°C) in minimum temperature compared to Comparative Example 1 was also calculated.

**[Table 2]**

| | | | Example 1 | Example 5 | Example 6 | Example 7 | Comparative Example 1 | Comparative Example 5 | Comparative Example 6 | Comparative Example 7 |
|---|---|---|---|---|---|---|---|---|---|---|
| Solid A | Component a | Disodium hydrogen phosphate dodecahydrate | 7 | 7 | 7 | 7 | 7 | 7 | 7 | 7 |
| Solid B | Component b | Citric acid | 3 | 3 | 3 | 3 | 3 | 3 | 3 | 3 |
| | Moisture absorbent | KC flock-W200 | 0 | 0.03 | 0.06 | 0.15 | 0 | 0.03 | 0.06 | 0.15 |
| Formation of agglomerated mass of solid B | | | formed | formed | formed | formed | not formed | not formed | not formed | not formed |
| Evaluations | Minimum temperature (°C) | | 7.9 | 11.4 | 12.2 | 15.7 | 0.1 | 0.2 | 3.3 | 6.5 |
| | Difference Δ (°C) in minimum temperature | | - | 3.5 | 4.3 | 7.8 | - | 0.1 | 3.2 | 6.4 |
| | Cooling time (min) taken to return to 18°C | | 31.3 | 32.7 | 40.9 | 19.2 | 26.3 | 31.2 | 32.0 | 30.8 |

### Examples 8 to 11

The component b and the moisture absorbent shown in Table 3 were mixed in the proportions (parts by mass) shown in Table 3, homogenized, and then subjected to the same process as in Example 1 to obtain an agglomerated mass. The obtained agglomerated mass had an l^{x} of 25 mm, b^{x} of 25 mm, and t^{x} of 5 mm. The average volume of the agglomerated mass was 2454 mm³.

The minimum temperature (°C) and the time (min) required to return to 18°C were measured in the same manner as in Example 1. For Examples 9 to 11, the difference Δ (°C) in the minimum temperature compared to Example 8 was calculated.

Note that N/A indicates that the minimum temperature did not drop below 18°C.

### Comparative Examples 8 to 11

The component a (powder) and component b (powder) shown in Table 3 were mixed with a moisture absorbent (powder) as required in the proportions (parts by mass) shown in Table 3, and homogenized.

The minimum temperature (°C) and time (min) required to return to 18°C were measured in the same manner as in Example 1. For Comparative Examples 9 to 11, the difference Δ (°C) in minimum temperature compared to Comparative Example 8 was also calculated.

**[Table 3]**

| | | | Example 8 | Example 9 | Example 10 | Example 11 | Comparative Example 8 | Comparative Example 9 | Comparative Example 10 | Comparative Example 11 |
|---|---|---|---|---|---|---|---|---|---|---|
| Solid A | Component a | Trisodium phosphate dodecahydrate | 7 | 7 | 7 | 7 | 7 | 7 | 7 | 7 |
| Solid B | Component b | Citric acid | 3 | 3 | 3 | 3 | 3 | 3 | 3 | 3 |
| | Moisture absorbent | KC flock-W50 | 0 | 0.03 | 0.06 | 0.15 | 0 | 0.03 | 0.06 | 0.15 |
| Formation of agglomerated mass of solid B | | | formed | formed | formed | formed | not formed | not formed | not formed | not formed |
| Evaluations | Minimum temperature (°C) | | 17.8 | 19.7 | 20.7 | 21.6 | 15.1 | 16.8 | 17.9 | 19.0 |
| | Difference Δ (°C) in minimum temperature | | - | 1.9 | 2.9 | 3.8 | - | 1.7 | 2.8 | 3.9 |
| | Cooling time (min) taken to return to 18°C | | 4.8 | #N/A | #N/A | #N/A | 13.4 | 7.4 | 4.6 | #N/A |

### Examples 12 to 15

The component b and the moisture absorbent shown in Table 4 were mixed in the proportions (parts by mass) shown in Table 4, homogenized, and then subjected to the same process as in Example 1 to obtain an agglomerated mass. The obtained agglomerated mass had an l^{x} of 25 mm, b^{x} of 25 mm, and t^{x} of 5 mm. The average volume of the agglomerated mass was 2454 mm³.

The minimum temperature (°C) and the time (min) required to return to 18°C were measured in the same manner as in Example 1. For Examples 13 to 15, the difference Δ (°C) in the minimum temperature compared to Example 12 was also calculated.

### Comparative Examples 12 to 15

The component a (powder) and component b (powder) shown in Table 4 were mixed with a moisture absorbent (powder) as required in the proportions (parts by mass) shown in Table 4, and homogenized.

The minimum temperature (°C) and time (min) required to return to 18°C were measured in the same manner as in Example 1. For Comparative Examples 13 to 15, the difference Δ (°C) in minimum temperature compared to Comparative Example 12 was also calculated.

**[Table 4]**

| | | | Example 12 | Example 13 | Example 14 | Example 15 | Comparative Example 12 | Comparative Example 13 | Comparative Example 14 | Comparative Example 15 |
|---|---|---|---|---|---|---|---|---|---|---|
| Solid A | Component a | Disodium hydrogen phosphate dodecahydrate | 7 | 7 | 7 | 7 | 7 | 7 | 7 | 7 |
| Solid B | Component b | DL-malic acid | 3 | 3 | 3 | 3 | 3 | 3 | 3 | 3 |
| | Moisture absorbent | KC flock-W50 | 0 | 0.03 | 0.06 | 0.15 | 0 | 0.03 | 0.06 | 0.15 |
| Formation of agglomerated mass of solid B | | | formed | formed | formed | formed | not formed | not formed | not formed | not formed |
| Evaluations | Minimum temperature (°C) | | 9.3 | 12.9 | 14.3 | 16.8 | 1.2 | 3.9 | 5.1 | 8.6 |
| | Difference Δ (°C) in minimum temperature | | - | 3.6 | 5.0 | 7.5 | - | 2.7 | 3.9 | 7.4 |
| | Cooling time (min) taken to return to 18°C | | 30.4 | 50.8 | 34.2 | 10.8 | 26.4 | 31.3 | 25.8 | 25.8 |

### Examples 16 to 19

The agglomerated mass obtained in Example 3 (agglomerated mass of component b and moisture absorbent) was pulverized to obtain an agglomerated mass having the size (l^{x}, b^{x}, t^{x}, volume) shown in Table 5.

The minimum temperature (°C) and the time (min) required to return to 18°C were measured in the same manner as in Example 1. For Examples 16 to 15 and Example 3, the difference Δ (°C) in the minimum temperature compared to Comparative Example 3 was also calculated.

**[Table 5]**

| | | | Comparativ e Example 3 | Exampl e 16 | Exampl e 17 | Exampl e 18 | Exampl e 19 | Exampl e 3 |
|---|---|---|---|---|---|---|---|---|
| Solid A | Component a | Disodium hydrogen phosphate dodecahydrate | 7 | 7 | 7 | 7 | 7 | 7 |
| Solid B | Component b | Citric acid | 3 | 3 | 3 | 3 | 3 | 3 |
| | Moisture absorbent | KC flock-W50 | 0.06 | 0.06 | 0.06 | 0.06 | 0.06 | 0.06 |
| Shape of agglomerated mass | | l(mm) | <1 | 3.0 | 8.0 | 13.0 | 18.0 | 25.0 |
| | | b(mm) | <1 | 2.5 | 7.5 | 12.5 | 17.5 | 25.0 |
| | | t(mm) | <1 | 2.5 | 5.0 | 5.0 | 5.0 | 5.0 |
| | | Average volume (mm³) | <1 | 18.8 | 300.0 | 812.5 | 1575.0 | 2454.4 |
| Evaluations | Minimum temperature (°C) | | 5.3 | 9.6 | 11.1 | 11.6 | 12.8 | 13.4 |
| | Difference Δ (°C) in minimum temperature | | - | 4.3 | 5.8 | 6.3 | 7.5 | 8.1 |
| | Cooling time (min) taken to return to 18°C | | 38.3 | 30.9 | 26.9 | 30.2 | 26.2 | 43.9 |

### Examples 20 to 22 and Comparative Examples 16 to 18

Agglomerated masses were obtained in the same manner as in Example 1, except that the component a, component b, the amount of moisture absorbent, and the size of the agglomerated mass shown were changed to as shown in Table 6. The minimum temperature (°C) and the time (min) required to return to 18°C were measured in the same manner as in Example 1.

**[Table 6]**

| | | | Comparative Example 16 | Comparative Example 1 | Comparative Example 17 | Comparative Example 18 | Example 20 | Example 1 | Example 21 | Example 22 |
|---|---|---|---|---|---|---|---|---|---|---|
| Solid A | Component a | Disodium hydrogen phosphate dodecahydrate | 8 | 7 | 3 | 2 | 8 | 7 | 3 | 2 |
| Solid B | Component b | Citric acid | 2 | 3 | 7 | 8 | 2 | 3 | 7 | 8 |
| | Moisture absorbent | KC flock-W50 | 0 | 0 | 1 | 2 | 0 | 0 | 0 | 0 |
| Formation of agglomerated mass of solid B | | | not formed | not formed | not formed | not formed | formed | formed | formed | formed |
| Shape of agglomerated mass | | l(mm) | 25 | 25 | 25 | 25 | 25 | 25 | 25 | 25 |
| | | b(mm) | 25 | 25 | 25 | 25 | 25 | 25 | 25 | 25 |
| | | t(mm) | 3 | 5 | 12 | 13 | 3 | 5 | 12 | 13 |
| | | Average volume (mm³) | 1473 | 2454 | 5890 | 6381 | 1473 | 2454 | 5890 | 6381 |
| Evaluations | Minimum temperature (°C) | | -0.2 | 0.1 | 0.2 | 2.5 | 8.1 | 7.9 | 14.0 | 16.9 |
| | Difference Δ (°C) in minimum temperature | | - | - | - | - | - | - | - | - |
| | Cooling time (min) taken to return to 18°C | | 21.8 | 26.3 | 13.5 | 10.9 | 30.7 | 31.3 | 25.9 | 13.4 |

### Examples 23 and 24

The component a shown in Table 7 was molded with a molding machine at a pressure of 415 kgf/cm² to obtain an agglomerated mass with a l^{x} of 25 mm, b^{x} of 25 mm, and t^{×} of 10 mm. The average volume of the agglomerated mass was 4909 mm³.

The component b (powder) and moisture absorbent shown in Table 7 were added to the obtained agglomerated mass in the proportions shown in Table 7, and the minimum cooling temperature (°C) was measured in the same manner as in Example 1. The time (min) required for the temperature to return to 18°C after the component b and moisture absorbent were added and the temperature dropped below 18°C was also measured in the same manner as in Example 1.

The difference (°C) in minimum temperature Δ compared to Comparative Example 1 was also calculated.

**[Table 7]**

| | | | Comparative Example 1 | Example 1 | Example 3 | Example 23 | Example 24 |
|---|---|---|---|---|---|---|---|
| Solid A | Component a | Disodium hydrogen phosphate dodecahydrate | 7 | 7 | 7 | 7 | 7 |
| Moisture absorbent | | KC flock-W50 | 0 | - | - | 0 | 0.14 |
| Solid B | Component b | Citric acid | 3 | 3 | 3 | 3 | 3 |
| | Moisture absorbent | KC flock-W50 | 0 | 0 | 0.06 | - | - |
| Evaluations | Formation of agglomerated mass of solid A | | not formed | not formed | not formed | formed | formed |
| | Formation of agglomerated mass of solid B | | not formed | formed | formed | not formed | not formed |
| | Minimum temperature (°C) | | 0.1 | 7.9 | 13.4 | 11.0 | 15.2 |
| | Difference Δ (°C) in minimum temperature | | - | 7.8 | 13.3 | 10.9 | 15.1 |
| | Cooling time (min) taken to return to 18°C | | 26.3 | 31.3 | 43.9 | 21.8 | 22.0 |

As is clear from the above results, the coolant of the present invention was able to cool moderately without being too cold, by forming at least one of the solid A and the solid B as an agglomerated mass of a predetermined size.

Further, when a moisture absorbent was added, the moisture absorbent absorbed water and was able to suppress an acceleration in the endothermic reaction. It was inferred that the acceleration in the reaction was suppressed as a result of the moisture absorbent absorbing the moisture generated in the endothermic reaction.

Another advantage of the coolant of the present invention is that it can be produced using only compounds that are highly safe.

## Claims

1. A coolant comprising a solid A and a solid B, wherein
the solid A and the solid B contain a compound that undergoes an endothermic reaction when the solid A and the solid B are brought into contact with each other, and
at least one of the solid A and the solid B is an agglomerated mass, and when a state in which the agglomerated mass is thrown onto a horizontal surface and come to rest in a most stable state is observed from a direction perpendicular to the horizontal surface, and a smallest gap between two parallel lines tangent to an outline (projected image) of the agglomerated mass is defined as a minor axis diameter (b), an average value (b^{x}) of values obtained by excluding the top 10% and bottom 10% values from lengths of (b) is from 1 mm to 100 mm.

2. The coolant according to claim 1, wherein the solid A comprises a hydrate, and the solid B comprises a hydrate dissociation agent.

3. The coolant according to claim 1 or 2, wherein
the solid A comprises a hydrate of an inorganic substance, and
the solid B comprises at least one selected from a polybasic acid, a metal salt of a polybasic acid, and an inorganic ammonium salt.

4. The coolant according to claim 1 or 2, wherein
the solid A comprises a hydrate of an inorganic substance, and
the solid B comprises at least one selected from the group consisting of adipic acid, oxalic acid, succinic acid, malic acid, acetic acid, tartaric acid, fumaric acid, and citric acid, and metal salts thereof.

5. The coolant according to any one of claims 1 to 4, wherein the solid B is an agglomerated mass.

6. The coolant according to claim 5, wherein the solid B comprises a moisture absorbent.

7. The coolant according to any one of claims 1 to 6, wherein the coolant further comprises a moisture absorbent.

8. The coolant according to claim 6 or 7, wherein the moisture absorbent is at least one selected from the group consisting of starch, lactose, and cellulose.

9. The coolant according to any one of claims 1 to 8, wherein the solid A and the solid B are in a non-contact state until use.

10. The coolant according to any one of claims 1 to 9, wherein when a gap measured in the direction perpendicular to the minor axis diameter (b) of the agglomerated mass is defined as a major axis diameter (l), a ratio (l^{x})/(b^{x}) of an average value (l^{x}) of values obtained by excluding the top 10% and bottom 10% values from lengths of (l) and the average value (b^{x}) is from 1 to 50.

11. A method for producing a coolant that comprises a solid A and a solid B, wherein
the solid A and the solid B contain a compound that undergoes an endothermic reaction when the solid A and the solid B are brought into contact with each other, and
the method comprises molding at least one of the solid A and the solid B into an agglomeration.

12. The method for producing a coolant according to claim 11, wherein the coolant is the coolant according to any one of claims 1 to 10.
